# EUROPÄISCHE PATENTANMELDUNG

(11) **EP 4 123 508 A1**
(43) Veröffentlichungstag der Anmeldung: **25.01.2023**
(21) Anmeldenummer: 21187281.7
(22) Anmeldetag: 22.07.2021
(51) Int. Cl.: G06N 3/02, G06N 3/063, G06F 21/50

(54) **VERFAHREN ZUR ÜBERPRÜFUNG DER INTEGRITÄT EINES NEURONALEN NETZES**

(71) Anmelder: Siemens Aktiengesellschaft, 80333 München (DE)
(72) Erfinder: Beck, Norbert, 91126 Schwabach (DE); Muhr, Hannes, 2463 Gallbrunn (AT); Taucher, Herbert, 1190 Wien (AT); Unger, Christoph, 2304 Orth an der Donau (AT); Wess, Matthias, 1030 Wien (AT)
(74) Vertreter: Maier, Daniel Oliver

(57) **Zusammenfassung**

Die Erfindung betrifft ein Verfahren zur Überprüfung der Integrität eines neuronalen Netzes während der Ausführung als so genannte Inferenz in einer Hardwareeinheit bzw. in einem Endgerät. Das neuronale Netz wird dabei durch seine Struktur und durch in einer Trainingsphase ermittelte Gewichtungsfaktoren (GF) definiert. Weiterhin wird für eine Implementierung des neuronalen Netzes ein so genanntes systolischen Array eingesetzt, welches matrixförmig angeordnete Verarbeitungselemente aufweist. Bei der Ausführung des neuronalen Netzes in der Hardwareeinheit wird in jedem Verarbeitungselement des systolischen Arrays über eine Abfolge von Gewichtungsfaktoren, welche im jeweiligen Verarbeitungselement seriell eintreffen und vom jeweiligen Verarbeitungselement verarbeitet werden, durch Akkumulation ein eindeutiger Prüfwert für das jeweilige Verarbeitungselement ermittelt. Nach Ausführung des neuronalen Netzes liegt dann ein Satz von eindeutigen Prüfwerten vor. Diese eindeutigen Prüfwerte werden mit entsprechenden Referenzwerten verglichen. Dabei wird der für das jeweilige Verarbeitungselement ermittelte, eindeutige Prüfwert mit einem entsprechenden Referenzwert für das jeweilige Verarbeitungselement verglichen. Wird beim Vergleich für zumindest ein Verarbeitungselement eine Abweichung zwischen dem jeweils während der Ausführung ermittelte, eindeutige Prüfwert und dem entsprechenden Referenzwert festgestellt, so wird ein bei der Ausführung erstelltes Ergebnis des neuronalen Netzes als nicht vertrauenswürdig eingestuft.

## Beschreibung

### Technisches Gebiet

Die gegenständliche Erfindung betrifft allgemein das Gebiet der neuronalen Netze. Insbesondere bezieht sich die vorliegende Erfindung auf ein Verfahren zur Überprüfung der Integrität eines neuronalen Netzes, welches als Anwendung oder so genannte Inferenz in einer Hardwareeinheit bzw. in einem Endgerät ausgeführt wird. Das neuronale Netz wird dabei durch seine Struktur und durch in einer Trainingsphase ermittelte Gewichtungsfaktoren definiert. Weiterhin wird für eine Implementierung des künstlichen, neuronalen Netzes ein so genanntes systolischen Array eingesetzt, welches matrixförmig angeordnete Verarbeitungselemente aufweist.

### Stand der Technik

Mit fortschreitender Digitalisierung und mit der damit einhergehenden Zunahme an Prozessdaten werden heutzutage für viele komplexe Problemstellungen neuronale Netze zur Datenverarbeitung eingesetzt. Neuronale Netz können dabei in nahezu allen technischen Bereichen zur Datenverarbeitung verwendet werden. Einsatzbereiche von neuronalen Netzen liegen z.B. in Bereichen wie der Text-, Bild- und Mustererkennung, einer schnellen Entscheidungsfindungen und/oder im Bereich von Klassifikationsaufgaben.

Ein künstliches, neuronales Netz stellt im Prinzip eine Nachbildung von biologischen Nervensystemen mit ihrer assoziativen Arbeitsweise dar. Die herausragende Eigenschaft des neuronales Netzes besteht insbesondere in der Lernfähigkeit - d.h. gestellte Probleme wie z.B. Text-, Bild- oder Mustererkennungen, rasche Entscheidungsfindungen, etc. werden auf Basis von trainiertem Wissen gelöst. Ein neuronales Netz besteht aus einer Vielzahl von künstlichen Neuronen, welche beispielsweise menschlichen Gehirnzellen nachempfunden sind. Die Neuronen werden im neuronalen Netz in unterschiedlichen Schichten oder so genannten Layern gruppiert und sind durch einen hohen Vernetzungsgrad gekennzeichnet. Als Schichten sind beispielsweise zumindest eine Eingangsschicht zur Aufnahme von Rohdaten, und eine Ausgangsschicht, von welcher der Abschluss bzw. das vom neuronalen Netz ermittelte Ergebnis bereitgestellt wird, vorgesehen. Dazwischen können eine oder mehrere "versteckte" Schichten (so genannte Hidden Layer) vorgesehen sein, von welchen Zwischenergebnisse ermittelt und bereitgestellt werden. Ein derartiges neuronales Netz ist beispielsweise aus der Schrift EP 3 502 974 A1 bekannt.

Das so genannte "Deep Learning" bezeichnet dabei eine spezielle Methode des maschinellen Lernens, welche künstliche, neuronale Netze mit zahlreichen "versteckten" Zwischenschichten zwischen der Eingangsschicht und der Ausgangsschicht einsetzt und dadurch eine umfangreiche innere Struktur herausbildet. Bei der Datenverarbeitung bzw. beim Lernen wird eine Dateneingabe von der sichtbaren Eingangsschicht verarbeitet und als Ausgabe an die nächste Schicht weitergeleitet. Diese nächste Schicht verarbeitet ihrerseits die Informationen und gibt die Ergebnisse ebenfalls an die zweite Schicht zur Weiterverarbeitung weiter, bis das Ergebnis in der letzten sichtbaren Schicht, der Ausgangsschicht, ausgegeben werden.

Um für eine vorgegebene Aufgabe (z.B. Text-, Bild- oder Mustererkennung, Sprachsynthese, Entscheidungsfindung oder Klassifizierungsaufgabe, etc.) einsetzbar zu sein, muss das neuronale Netz in einer Trainingsphase trainiert werden. Während dieser Trainingsphase wird das neuronale Netz anhand z.B. vorgegebener Trainingsdaten und/oder -mustern trainiert, eine in Bezug auf die Aufgabe richtige Antwort zu liefern. Dabei werden ausgehend von z.B. vorgebbaren oder zufällig gewählten Werten für eine Startgewichtung bzw. für Startgewichtungsfaktoren, welche den Neuronen zugeschrieben werden, Gewichtung bzw. Gewichtungsfaktor und gegebenenfalls ein Biaswert für das jeweilige Neuron je Trainingszyklus modifiziert. Die im jeweiligen Trainingszyklus erhaltenen Ergebnisse des neuronalen Netzes werden dann z.B. mit Referenzdaten/-muster verglichen, bis eine gewünschte Ergebnisqualität erzielt worden ist. Die so ermittelten Gewichtungsfaktoren werden dann z.B. gespeichert, um für eine Ausführung der jeweiligen Aufgabe durch das trainierte, neuronale Netz - der so genannten Inferenz - herangezogen zu werden.

Für die Ausführung eines in der Trainingsphase auf bestimmte Datenmuster trainierten, neuronalen Netzes bzw. einer so genannten Inferenz mit den in der Trainingsphase ermittelten und üblicherweise fixen Gewichtungsfaktoren gibt es eine breite Palette von Plattformen. Je nach den Anforderungen der jeweiligen Anwendung können als Hardware-Plattform beispielsweise generische Multicore-CPUs und GPUs oder integrierte Schaltungen, wie z.B. so genannte Field Programmable Gate Arrays (FPGAs) oder anwendungsspezifischen, integrierten Schaltungen (so genannten ASICs), insbesondere speziellen Neuronale-Netze-ASICs, verwendet werden. Insbesondere FPGAs und/oder spezielle Neuronalen-Netze-ASICs werden vor allem dann eingesetzt, wenn es um maßgeschneiderte, echtzeitfähige und verlustoptimierte Lösungen geht, wie sie z.B. üblicherweise in Bereichen wie z.B. Automotive, Mobility und/oder der Automatisierung erforderlich sind.

Häufig werden für eine effiziente Implementierung von neuronalen Netzen, insbesondere bei Verwendung von Deep Learning, so genannte systolisches Arrays bzw. systolische Anordnung eingesetzt. Ein systolisches Array ist ein homogenes Netzwerk von gekoppelten Zellen, Knoten bzw. Verarbeitungselementen. Die Verarbeitungselemente sind dabei matrixförmig (z.B. als zweidimensionale Matrix) angeordnet und anwendungsspezifisch konfiguriert. Jedes Verarbeitungselement berechnet unabhängig ein Teilergebnis auf Basis der von ihren vorgelagerten Nachbar-Zellen empfangenen Daten, speichert dieses und leitet es stromabwärts weiter, wobei die Weiterleitung z.B. durch Eintreffen neuer Daten in der jeweiligen Verarbeitungseinheit ausgelöst wird. D.h. ein Datenstrom wird z.B. wellenartig durch das systolische Array hindurch getaktet. Beim Abarbeiten eines neuronalen Netzes bzw. der jeweiligen Schichten des neuronalen Netzes durch das systolische Array sorgt z.B. eine zentrale Prozesseinheit unter anderem dafür, dass beispielsweise neben einem Satz an Eingangsdaten die Gewichtungsfaktoren des neuronalen Netzes zum richtigen Zeitpunkt aus einem Hauptspeicher zum jeweiligen Verarbeitungselement geführt werden. Die Gewichtungsfaktoren des neuronalen Netzes bestimmten dabei den Einfluss des jeweiligen Verarbeitungselements auf das Teilergebnis des jeweiligen Verarbeitungselements. Eine Implementierung eines neuronalen Netzes mit Hilfe eines systolischen Arrays ist beispielsweise aus der Schrift US 10,817,260 B1 bekannt.

Bei Einsatz von trainierten, neuronalen Netzen, so genannten Inferenzen, insbesondere in Bereichen wie Automotive, Mobility und/oder Automatisierung ist es meist wichtig, Zuverlässigkeit, Robustheit und Sicherheit der jeweiligen Systeme zu garantieren. Neuronale Netze sind insbesondere durch die Anordnung der Neuronen und deren Verbindungen untereinander - d.h. durch ihre Struktur oder Topologie definiert. Typische Strukturen sind beispielsweise einschichtige oder mehrschichtige feedforward Netze oder rekurrente Netze. Weiterhin werden neuronale Netze auch durch das trainierte Verhalten definiert - d.h. durch die Gewichtungsfaktoren, welche in der Trainingsphase ermittelt wurden. Eine Veränderung eines der beiden - d.h. der Struktur und/oder des trainierten Verhaltens - würde bei einer Anwendung eines trainierten, neuronalen Netzes (d.h. einer Inferenz) in einer Hardwareeinheit bzw. in einem Endgerät zu fehlerhaften, falschen und damit nicht vertrauenswürdigen Ergebnissen führen.

Eine Bedrohung (security threat) für die korrekte Abarbeitung eines neuronalen Netzes, welche zu falschen und nicht vertrauenswürdigen Ergebnissen führen, stellt beispielsweise eine bewusste Modifikation der trainierten Gewichtungsfaktoren z.B. in einer Speichereinheit dar, welche diese für die Verarbeitungselemente des systolischen Arrays zur Verfügung stellt. Weiterhin können die Gewichtungsfaktoren in der Speichereinheit z.B. durch nebenläufige Prozesse, welche auf demselben Speicher arbeiten, unbewusst modifiziert oder beeinflusst werden. Auch so genanntes Bitkippen, welches z.B. durch physikalische Einflüsse, wie z.B. Strahlung, Versorgung, etc., auftreten kann, kann ein Sicherheitsrisiko (safety threat) für eine korrekte Abarbeitung des neuronalen Netzes darstellen. Durch das so genannte Bitkippen können die Gewichtsfaktoren im Speicher z.B. beeinflusst oder verändert werden. Weiterhin können die Gewichtfaktoren auch auf dem Weg vom Hauptspeicher in das systolische Array oder am Weg durch das systolische Array modifiziert werden. Ein fehlerhaftes oder falsches Ergebnis eines neuronalen Netzes kann vor allem in sicherheitsrelevanten Bereichen zu kritischen Situationen führen. Daher ist es wichtig, die Integrität von neuralen Netzen, vor allem die Integrität der Struktur (Netzwerkgraph) und die Integrität der Gewichtsfaktoren des neuronalen Netzes, auch während des laufenden Betriebs in einem Endgerät, insbesondere bei Endgeräten im Einsatz in sicherheitsrelevanten Bereichen, bzw. bei der Ausführung auf einer Hardwareeinheit zu überprüfen.

### Darstellung der Erfindung

Der Erfindung liegt daher die Aufgabe zugrunde, ein Verfahren zur Überprüfung der Integrität eines neuronalen Netzes anzugeben, durch welches während der Ausführung auf einer Hardwareeinheit bzw. in einem Endgerät Veränderungen der Struktur und/oder der Gewichtsfaktoren des neuronalen Netzes auf einfache Weise und ohne großen Aufwand erkannt werden.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs angeführten Art zur Überprüfung der Integrität eines neuronalen Netzes während einer Ausführung in einer Hardwareeinheit oder in einem Endgerät als Anwendung bzw. Inferenz. Das neuronale Netz ist dabei durch seine Struktur - d.h. Anordnung und Verbindung seiner Neuronen - sowie durch in einer Trainingsphase ermittelte Gewichtungsfaktoren definiert, welche ein Verhalten des neuronalen Netzes bestimmten. Für die Implementierung des neuronalen Netzes wird ein so genanntes systolisches Array eingesetzt, welche matrixförmig angeordnete Verarbeitungselemente aufweist. Bei der Ausführung des neuronalen Netzes in der Hardwareeinheit wird in jedem Verarbeitungselement des systolischen Arrays über eine Abfolge von Gewichtungsfaktoren, welche im jeweiligen Verarbeitungselement seriell eintreffen und vom jeweiligen Verarbeitungselement verarbeitet werden, durch Akkumulation ein eindeutiger Prüfwert für das jeweilige Verarbeitungselement ermittelt. Nach Ausführung des neuronalen Netzes liegt dann ein Satz von eindeutigen Prüfwerten vor. Diese eindeutigen Prüfwerte werden mit entsprechenden Referenzwerten verglichen. Dabei wird der für das jeweilige Verarbeitungselement ermittelte, eindeutige Prüfwert mit einem entsprechenden Referenzwert für das jeweilige Verarbeitungselement verglichen. Wird beim Vergleich für zumindest ein Verarbeitungselement eine Abweichung zwischen dem jeweils während der Ausführung ermittelte, eindeutige Prüfwert und dem entsprechenden Referenzwert festgestellt, so wird ein bei der Ausführung erstelltes Ergebnis des neuronalen Netzes als unsicher bzw. als nicht vertrauenswürdig eingestuft.

Der Hauptaspekt der gegenständlichen Erfindung besteht darin, dass die Integrität eines neuronalen Netzes während der Ausführung als so genannte Inferenz bzw. als Anwendung in einer Hardwareeinheit oder in einem Endgerät mittels eines systolischen Arrays auf einfache Weise und mit relativ geringem, zusätzlichen Hardware-Aufwand sichergestellt wird. Durch das Verfahren werden idealerweise sowohl die Integrität des trainierten Verhaltens des neuronalen Netzes - d.h. der Gewichtungsfaktoren - als auch die Reihenfolge der Gewichtungsfaktoren des neuronalen Netzes auf Integrität überprüft, indem die Gewichtungsfaktoren in jener Abfolge in den jeweiligen Verarbeitungseinheiten des systolischen Arrays akkumuliert werden, in welche sie den jeweiligen Verarbeitungseinheiten zur Verfügung gestellt werden. Durch den Vergleich des jeweiligen in der jeweiligen Verarbeitungseinheit ermittelten Prüfwertes mit einem entsprechenden Referenzwert für die jeweilige Verarbeitungseinheit sind falsche oder fehlerhafte Ergebnisse des neuronalen Netzes sehr einfach zu erkennen. Das Verfahren ermöglicht damit auf einfache Weise, Sicherheitsbedrohungen durch bewusste Modifikation (so genannte Security Threats) oder durch unbewusste Modifikation (z.B. Bitkippen, Modifikation durch nebenläufige Prozesse im Speicher oder bei der Übertragen vom Speicher ins systolische Array - so genannte Safety Threats) der Gewichtungsfaktoren zu erkennen und entsprechende Maßnahmen je nach Anwendung und Einsatz des neuronalen Netzes zu setzen (z.B. Fehler- oder Alarmmeldung, Abbruch der Anwendung, etc.).

Eine zweckmäßige Weiterbildung der Erfindung sieht vor, dass in den Verarbeitungselementen des systolischen Arrays Prüfeinheiten vorgesehen werden, welche als zusätzliche Hardwarekomponente in den Verarbeitungselementen ausgeführt sind und durch welche die jeweiligen Gewichtungsfaktoren zu den Prüfwerten akkumuliert werden. Der zusätzliche Hardwareaufwand für die Ermittlung der Prüfwerte in den Verarbeitungselementen des systolischen Arrays ist damit im Vergleich zum Aufwand für das systolische Array für die Abarbeitung des neuronalen Netzes relativ gering. Die Prüfeinheit in den Verarbeitungselementen des systolischen Arrays kann z.B. bereits in einer Designphase der Hardware (z.B. FPGA, ASIC) für die Ausführung des neuronalen Netzes eingeplant werden.

Es ist vorteilhaft, wenn zum Ermitteln des Prüfwertes aus der Abfolge der vom jeweiligen Verarbeitungselement verarbeiteten Gewichtungsfaktoren ein zyklisches Redundanzprüfungsverfahren verwendet wird. Ein zyklisches Redundanzprüfungsverfahren bzw. eine zyklische Redundanzprüfung (englisch: cyclic redundancy check oder kurz: CRC) ist ein Verfahren, mit welchen auf einfache Weise ein Prüfwert für z.B. Daten ermittelt wird, um Fehler in den Daten zu erkennen, welche z.B. bei der Übertragung und/oder Speicherung auftreten können. In den Verarbeitungselementen des systolischen Arrays kann die zyklische Redundanzprüfung sehr einfach auf die Gewichtungsfaktoren des neuronalen Netzes angewendet werden, welche in einer vorgegebenen Abfolge aus einer Speichereinheit zu den Verarbeitungseinheiten geführt werden.

Bei Verwendung eines zyklischen Redundanzprüfungsverfahrens kann idealerweise der entsprechende Referenzwert des jeweiligen Verarbeitungselements als finaler bzw. letzter Gewichtungsfaktor in die Abfolge von Gewichtungsfaktoren des jeweiligen Verarbeitungselements eingefügt. D.h. der jeweilige Referenzwert ist Teil des jeweiligen Gewichtungsfaktoren-Sets, welches von einem Verarbeitungselement verarbeitet wird. Es wird als letzter, zusätzlicher Gewichtungsfaktor zum ermittelten Prüfwert am Ende der Abarbeitung hinzugefügt. Dann kann sehr einfach geprüft werden, ob die resultierende Summe einen vorgegebenen Wert, üblicherweise Null ergibt, wodurch sehr einfach Modifikationen der Gewichtungsfaktoren und/oder Veränderungen in der Abfolge der Gewichtungsfaktoren erkannt werden können.

Weiterhin ist es auch günstig, wenn zum Ermitteln des Prüfwertes aus der Abfolge der vom jeweiligen Verarbeitungselement verarbeiteten Gewichtungsfaktoren ein Hash-Algorithmus eingesetzt wird. Durch die Verwendung eines Hash-Algorithmus, um die Abfolge der Gewichtungsfaktoren im jeweiligen Verarbeitungselement zu einem eindeutigen Prüfwert zu akkumulieren, wird die Sicherheit des Verfahrens erhöht, Modifikationen und Veränderungen zu erkennen. Ein Hash-Algorithmus stellt ein Abbildung einer großen Menge an Eingabedaten, wie den Gewichtungsfaktoren, auf eine kleinere Zielmenge, wie den Prüfwert des jeweiligen Verarbeitungselements, dar. Dabei liefert der Hash-Algorithmus für die Eingabedaten derart Werte, dass unterschiedliche Eingabedaten auch zu unterschiedlichen Ausgabewerten führen. Das heißt, ein mittels eines Hash-Algorithmus generierter Ausgabewert ist idealerweise eindeutig und kollisionsfrei.

Da in Abhängigkeit von der jeweiligen Verwendung des Arrays die Gewichtungsfaktoren nur von einer Kante der matrixförmigen Anordnung der Verarbeitungselemente aus über das systolische Array geschoben werden, empfiehlt es sich, dass nur von jenen Verarbeitungselemente des systolischen Arrays ein Prüfwert ermittelt wird, von welchen Eingangsschnittstellen für die Gewichtungsfaktoren in das systolische Array gebildet werden. Alternativ kann die Ermittlung des Prüfwerts auf jene Verarbeitungselemente des systolischen Arrays reduziert werden, von welchen Ausgangsschnittstellen für die Gewichtungsfaktoren im systolischen Array gebildet werden. Damit kann auf einfache Weise der Aufwand für die Integritätsüberprüfung des neuronalen Netzes weiter reduziert werden.

Es ist auch von Vorteil, wenn aus den Prüfwerten der Verarbeitungselemente durch zeilen- und/oder spaltenweise Akkumulierung eine Prüfsignatur gebildet wird. Auf diese Weise müssen beispielsweise nicht alle von den Verarbeitungselementen generierten Prüfwerte aus dem systolischen Array geschoben werden, sondern es werden z.B. Prüfsignaturen für die Zeilen und/oder Spalten der matrixförmigen Anordnung der Verarbeitungselemente oder z.B. eine Prüfsignatur für die gesamte Anordnung der Verarbeitungselemente des systolischen Arrays ermittelt. Diese Zeilen- und/oder Spaltenprüfsignaturen bzw. die einzelne Prüfsignatur für das gesamte Array werden dann mit jeweils entsprechenden Referenzwerten verglichen.

Zweckmäßigerweise ist vorgesehen, dass die Referenzwerte für die Verarbeitungselemente mittels analytischer Ableitung oder durch Simulation in einer Designphase des neuronalen Netzes oder mit Hilfe zumindest einer initialen Ausführung des neuronalen Netzes ermittelt werden. Bei der analytischen Ableitung werden die Referenzwerte für die Verarbeitungselemente, Zeilen oder Spalten von Verarbeitungselemente oder für die Prüfsignatur des gesamten Arrays mittels mathematischer Methoden berechnet. Alternativ können die Referenzwerte auch auf einfache Weise in der Designphase des neuronalen Netzes mittels Simulation bestimmt werden, wobei für die Simulation dieselben Gewichtungsfaktoren für das neuronale Netz wie für den laufenden Betrieb bzw. die Ausführung im Endgerät bzw. in der Hardwareeinheit verwendet werden. Eine weitere Möglichkeit zur Ermittlung der Referenzwerte bietet zumindest ein initialer Durchlauf des neuronalen Netzes in einer vertrauenswürdigen Umgebung bzw. unter vertrauenswürdigen Bedingungen, beispielsweise unmittelbar nach einer Implementierung im Endgerät bzw. in der Hardwareeinheit für den laufenden Betrieb. Bei diesem zumindest einen initialen Durchlauf werden in den Verarbeitungselementen unter weitgehend realen Bedingungen die Prüfwerte ermittelt, welche dann als Referenzwerte dienen. Günstig ist dabei es, wenn mehrere "initiale" Durchläufe durchgeführt werden und die Referenzwerte für die Integritätsprüfung z.B. als Mittel der in den Durchläufen ermittelten Prüfwerte bestimmt werden.

Eine bevorzugte Ausgestaltung der Erfindung sieht vor, dass die Referenzwerte für die Verarbeitungseinheiten in einer Speichereinheit der Hardwareeinheit, auf welcher das neuronale Netz ausgeführt wird, hinterlegt werden. Damit stehen die Referenzwerte rasch und ohne größeren Aufwand für den Vergleich mit den während der Ausführung des neuronalen Netzes ermittelten Prüfwerten zur Verfügung. Die Referenzwerte können beispielsweise in derselben Speichereinheit wie die Gewichtungsfaktoren des neuronalen Netzes abgelegt sein, sofern der Speicherbereich für die Referenzwerte vertrauenswürdig ist.

Eine weitere Ausgestaltung der Erfindung sieht vor, dass für die Implementierung des neuronalen Netzes ein so genanntes Field Programmable Array bzw. FPGA oder eine anwendungsspezifische, integrierte Schaltung bzw. ASIC als Hardware-Plattform verwendet wird.

### Kurzbeschreibung der Zeichnung

Die Erfindung wird nachfolgend in beispielhafter Weise anhand der beigefügten Figuren erläutert. Dabei zeigen:
- Figur 1: schematisch eine beispielshafte Architektur zur Durchführung des erfindungsgemäßen Verfahrens zur Über-prüfung der Integrität eines neuronalen Netzes;
- Figur 2: einen beispielhaften Ablauf des erfindungsgemäßen Verfahrens zur Überprüfung der Integrität eines neuronalen Netzes während der Ausführung in einem Endgerät

### Ausführung der Erfindung

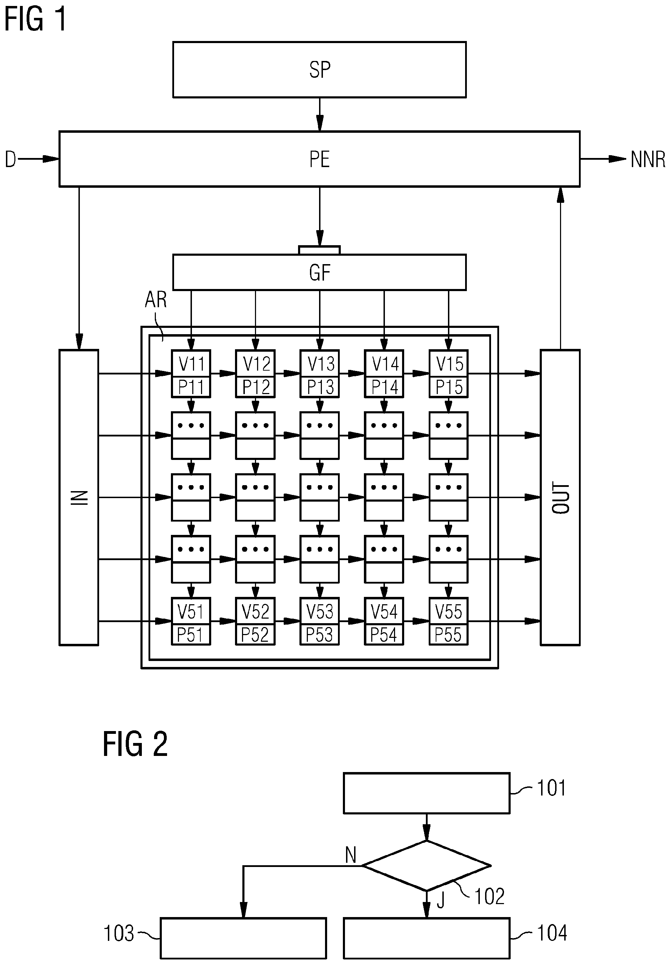

Figur 1 zeigt beispielhaft und schematisch eine Architektur einer Hardwareeinheit, welche in einem Endgerät zur Ausführung bzw. zum schichtweisen Abarbeiten eines neuronalen Netzes eingesetzt werden kann. Weiterhin ist die in Figur 1 beispielhaft dargestellte Architektur dazu eingerichtet, dass erfindungsgemäße Verfahren zur Überprüfung der Integrität eines neuronalen Netzes während des laufenden Betriebs durchzuführen. Bei einer derartigen Architektur kann beispielsweise für die Implementierung des neuronalen Netzes ein so genanntes Field Programmable Array (FPGA) oder eine anwendungsspezifische, integrierte Schaltung (ASIC), insbesondere spezielle ASICs zur Realisierung neuronaler Netze, als Hardware-Plattform verwendet werden.

Die beispielhafte Hardware-Architektur weist zumindest eine zentrale Prozesseinheit PE auf, welche über einen Dateneingang D z.B. von einer Kamera, etc. Eingangsdaten IN (z.B. Bilddaten, Muster, etc.) erhält. Weiterhin weist die Hardware-Architektur eine Speichereinheit SP auf, in welche z.B. die in einer Trainingsphase ermittelten Gewichtungsfaktoren GF hinterlegt sind. Diese Gewichtungsfaktoren GF werden von der zentralen Prozesseinheit PE aus der Speichereinheit SP einem systolischen Array AR während der Ausführung des neuronalen Netzes als Inferenz zur Verfügung gestellt. Ebenso werden die Eingangsdaten IN, auf welche die Gewichtungsfaktoren angewendet werden sollen, von der zentralen Prozesseinheit PE zum systolischen Array geleitet.

Das systolische Array weist matrixförmig angeordnete Verarbeitungselemente V11, ..., V55 auf, welche die Eingangsdaten IN und die Gewichtungsfaktoren lokal propagieren. Die zentrale Prozesseinheit PE sorgt neben anderen Aufgaben dafür, dass während der Ausführung des neuronalen Netzes bzw. dem Abarbeiten der Schichten des neuronalen Netzes die Gewichtungsfaktoren GF zum richtigen Zeitpunkt von der Speichereinheit SP zum jeweiligen Verarbeitungselemente V11, ..., V55 geführt werden. Dabei bilden die Verarbeitungselemente V11, V12, V13, V14, V15 des systolischen Arrays beispielsweise Eingangsschnittstellen für die Gewichtungsfaktoren GF innerhalb des systolischen Arrays, an welchen die Gewichtungsfaktoren GF in das systolische Array übernommen werden bzw. von welchen aus die Gewichtungsfaktoren über das systolische Array AR geschoben werden. Die Verarbeitungselemente V51, V52, V53, V54, V55 bilden z.B. Ausgangsschnittstellen für die Gewichtungsfaktoren GF.

Die Eingangsdaten IN können beispielsweise den Verarbeitungselemente V11 bis V51, welche z.B. eine erste Spalte der matrixförmigen Anordnung bilden, zugeführt werden. Ausgabedaten bzw. Ergebnisse OUT des systolischen Arrays werden beispielsweise über die Verarbeitungselemente V15 bis V55, welche z.B. eine letzte Spalte der matrixförmigen Anordnung bilden, an der zentralen Prozesseinheit PE geleitet. Von der zentralen Prozesseinheit PE werden die Ausgabedaten bzw. die Ergebnisse OUT des systolischen Arrays dann gegebenenfalls zu einem Ergebnis NNR des neuronalen Netzes zusammengeführt und über einen Datenausgang zur Verfügung gestellt.

Weiterhin weisen die Verarbeitungselemente V11, ..., V55 des systolischen Arrays AR Prüfeinheiten P11, ..., P55 auf. Diese Prüfeinheiten P11, ..., P55 sind als zusätzliche Hardwarekomponente in den jeweiligen Verarbeitungselementen V11, ..., V55 ausgeführt. Die Prüfeinheiten P11, ..., P55 akkumulieren jene Gewichtungsfaktoren GF, welche von den jeweiligen Verarbeitungselementen V11, ..., V55 verarbeitet werden, zu eindeutigen Prüfwerten. D.h. von einer ersten Prüfeinheit P11 in einem ersten Verarbeitungselement V11 des systolischen Arrays wird beispielsweise während der Ausführung des neuronalen Netzes z.B. je Schicht ein eindeutiger Prüfwert für das erste Verarbeitungselement V11 gebildet, indem eine Abfolge der seriell im ersten Verarbeitungselement V11 eintreffenden Gewichtungsfaktoren GF von der Prüfeinheit P11 aufakkumuliert werden. Analog wird von einer zweiten Prüfeinheit P12, welche in einem zweiten Verarbeitungselement V12 vorgesehen ist, ein eindeutiger Prüfwert für das zweite Verarbeitungselement V12 ermittelt, in welchen die seriell im zweiten Verarbeitungselement V12 eintreffenden Gewichtungsfaktoren GF aufakkumuliert sind. Die eindeutigen Prüfwerte für die weiteren Verarbeitungselemente V13, ..., V55 werden ebenfalls auf diese Weise von den jeweiligen Prüfeinheiten P13, ..., P55 der weiteren Verarbeitungselemente V13, ..., V55 ermittelt.

Figur 2 zeigt einen beispielhaften Ablauf des Verfahrens zur Überprüfung der Integrität eines neuronalen Netzes, während dieses in einem Endgerät bzw. in einer Hardwareeinheit als Inferenz ausgeführt wird. Dabei wird für die Implementierung des neuronalen Netzes beispielsweise eine Architektur als Hardware-Plattform verwendet, welche schematisch und beispielhaft in Figur 1 dargestellt ist.

In einem Ermittlungsschritt 101 des Verfahrens, welcher während der Ausführung des neuronalen Netzes bzw. beim Abarbeiten der Schichten des neuronalen Netzes durch das systolische Array AR ausgeführt wird, wird in jedem Verarbeitungselement V11, ..., V55 des systolischen Arrays AR ein eindeutiger Prüfwert ermittelt. Dazu wird eine Abfolge jener Gewichtungsfaktoren GF, welche bei der Ausführung des neuronalen Netzes seriell im jeweiligen Verarbeitungselement V11, ..., V55 eintreffen, z.B. von der im jeweiligen Verarbeitungselement V11, ..., V55 vorgesehenen Prüfeinheit P11, ..., P55 aufakkumuliert. Die jeweiligen Gewichtungsfaktoren GF werden dabei von der zentralen Prozesseinheit PE zum richtigen Zeitpunkt und in der - z.B. während der Trainingsphase ermittelten - Abfolge aus der Speichereinheit SP zu den jeweiligen Verarbeitungselementen V11, ..., V55 geführt.

Die Ermittlung des jeweiligen, eindeutigen Prüfwerts für das jeweilige Verarbeitungselement V11, ..., V55 aus der Abfolge der vom jeweiligen Verarbeitungselement V11, ..., V55 verarbeiteten Gewichtungsfaktoren GF kann beispielsweise mittels eines zyklischen Redundanzprüfungsverfahrens oder einer zyklischen Redundanzprüfung (englisch: cyclic redundancy check oder kurz: CRC) erfolgen. Weiterhin kann für die Ermittlung des jeweiligen, eindeutigen Prüfwerts ein Hash-Algorithmus verwendet werden, durch welchen die im jeweiligen Verarbeitungselement V11, ..., V55 verarbeiteten Gewichtungsfaktoren GF zu einem eindeutigen und kollisionsfreien Prüfwert für das jeweilige Verarbeitungselement V11, ..., V55 im Ermittlungsschritt 101 akkumuliert werden.

Anstatt in jedem Verarbeitungselement V11, ..., V55 des systolischen Arrays AR im Ermittlungsschritt 101 einen eindeutigen Prüfwert zu ermitteln, kann beispielsweise eine Berechnung von Prüfwerten auf jene Verarbeitungselemente V11 bis V15 eingeschränkt werden, welche z.B. Eingangsschnittstellen für die Gewichtungsfaktoren in das systolische Array AR bilden. Alternativ können z.B. auch nur die Prüfwerte in jenen Verarbeitungselementen V51 bis V55 des systolischen Arrays AR berechnet werden, durch welche z.B. Ausgangsschnittstellen für die Gewichtungsfaktoren GF im systolischen Array AR gebildet werden. Eine weitere Vereinfachung besteht beispielsweise darin, dass z.B. am Ende des Ermittlungsschritts 101 über die jeweils ermittelten Prüfwerte eine Prüfsignatur berechnet wird. Dabei können die Prüfwerte der jeweiligen Verarbeitungselemente V11, ..., V55 beispielsweise zeilen- und/oder spaltenweise akkumuliert werden und es müssen am Ende des Ermittlungsschritts 101 nicht sämtliche, ermittelten Prüfwerte aus dem systolischen Array geschoben werden.

Nach Ermittlung der eindeutigen Prüfwerte für alle Verarbeitungseinheiten V11, ..., V55, für die Eingangsschnittstellen-Verarbeitungselemente V11 bis V15 oder für die Ausgangsschnittstellten-Verarbeitungselemente V51 bis V55 oder die Berechnung einer Prüfsignatur aus den eindeutigen Prüfwerten im Ermittlungsschritt 101 steht ein eindeutiges Set an Prüfwerten bzw. eine eindeutige Prüfsignatur zur Verfügung. Die Prüfwerte bzw. die daraus gebildete Prüfsignatur werden dann in einem Vergleichsschritt 102 mit entsprechenden Referenzwerten verglichen. D.h. wurde z.B. von jedem Verarbeitungselement V11, ..., V55 bzw. von der zugehörigen Prüfeinheit P11, ..., P55 ein eindeutiger Prüfwert im Ermittlungsschritt 101 generiert, so wird im Vergleichsschritt 102 jeder dieser Prüfwert mit einem entsprechenden Referenzwert für das jeweilige Verarbeitungselement V11, ..., V55 verglichen. Wurden im Ermittlungsschritt 101 nur für die Eingangsschnittstellen-Verarbeitungselemente V11 bis V15 oder für die Ausgangsschnittstellten-Verarbeitungselemente V51 bis V55 Prüfwerte ermittelt, so werden im Vergleichsschritt 102 nur für diese Verarbeitungselemente V11 bis V15 bzw. V51 bis V55 entsprechende Referenzwerte herangezogen und mit den jeweiligen Prüfwerten verglichen. Wurde im Ermittlungsschritt 101 beispielsweise eine Prüfsignatur für das neuronale Netz aus den Prüfwerten ermittelt, so wird im Vergleichsschritt 102 diese Prüfsignatur mit einer Referenzsignatur verglichen.

Die Referenzwerte, welche im Vergleichsschritt 102 herangezogen werden, können beispielsweise in einer Speichereinheit der Hardwareeinheit hinterlegt sein. Als Speichereinheit kann beispielsweise die Speichereinheit SP verwendet werden, in welcher auch die Gewichtungsfaktoren GF für das trainierte, neuronale Netz abgelegt sind.

Weiterhin kann beispielsweise bei Verwendung eines zyklischen Redundanzverfahrens bzw. einer zyklischen Redundanzprüfung zur Berechnung der eindeutigen Prüfwerte in den Verarbeitungselementen V11, ..., V55 bzw. in den zugehörigen Prüfeinheiten P11, ..., P55 der entsprechende Referenzwert als finaler Gewichtungsfaktor in die Abfolge der Gewichtungsfaktoren GF des jeweiligen Verarbeitungselements V11, ..., V55 eingefügt werden. Der jeweilige Referenzwert ist damit ein Teil des Gewichtungsfaktoren-Sets und wird dann zu Ende des Ermittlungsschritts 101 zum jeweiligen Prüfwert (d.h. den akkumulierten Gewichtungsfaktoren des jeweiligen Verarbeitungselementes V11, ..., V55) aufakkumuliert. Im Vergleichsschritt 102 muss dann z.B. nur mehr geprüft werden, ob die resultierende Summe aus Prüfwert (bzw. den akkumulierten Gewichtungsfaktoren des jeweiligen Verarbeitungselement V11, ..., V55) und Referenzwert beispielsweise einen Wert gleich Null oder ungleich Null ergibt.

Die Referenzwerte, welche im Vergleichsschritt 102 mit den jeweiligen Prüfwerten verglichen werden, können beispielsweise mittels analytischer Ableitung oder durch Simulation in einer Designphase des neuronalen Netzes oder mit Hilfe zumindest einer initialen Ausführung des neuronalen Netzes ermittelt werden. Bei der analytischen Ableitung werden z.B. die Referenzwerte für die Verarbeitungselemente V11, ..., V55, für die Eingangsschnittstellen- bzw. Ausgangsschnitten-Verarbeitungselemente V11 bis V15 bzw. V51 bzw. V55 oder für die Prüfsignatur des gesamten systolischen Arrays AR mittels mathematischer Methoden berechnet. Alternativ können die Referenzwerte z.B. auch während der Designphase des neuronalen Netzes mittels Simulation bestimmt werden, wobei für die Simulation dieselben Gewichtungsfaktoren GF wie für den laufenden Betrieb bzw. die Ausführung des neuronalen Netzes im Endgerät bzw. in der Hardwareeinheit verwendet werden müssen. Die Referenzwerte bzw. die Referenzsignatur können auch mittels eines initialen Durchlaufs des neuronalen Netzes in einer vertrauenswürdigen Umgebung bzw. unter vertrauenswürdigen Bedingungen, beispielsweise unmittelbar nach der Implementierung im Endgerät bzw. in der Hardwareeinheit ermittelt werden. Dabei können beispielsweise mehrere "initiale" Durchläufe durchgeführt werden und die Referenzwerte bzw. die Referenzsignatur für die Integritätsprüfung z.B. als Mittel der in den Durchläufen ermittelten Werte bestimmt werden.

Wird während des Vergleichsschritts 102 festgestellt, dass zumindest bei einem Verarbeitungselement V11, ..., V55 der für dieses Verarbeitungselement V11, ..., V55 der ermittelte, eindeutige Prüfwert vom entsprechenden Referenzwert abweicht, so wird in einem ersten Bewertungsschritt 103 das Ergebnis des neuronalen Netzes als nicht vertrauenswürdig eingestuft. D.h. stimmt zumindest ein in der Prüfeinheit P11, ..., P55 eines Verarbeitungselements V11, ..., V55 ermittelte Prüfwert nicht mit dem entsprechenden Referenzwert überein, so kann im ersten Bewertungsschritt 103 erkannt werden, dass z.B. eine Veränderung der Gewichtungsfaktoren GF (z.B. Wert und/oder Abfolge) vorliegt. Dies gilt auch, wenn z.B. aus den ermittelten Prüfwerten eine Prüfsignatur für das neuronale Netz ermittelt wurde und diese nicht mit der Referenzsignatur übereinstimmt.

Wurde z.B. bei Verwendung eines zyklischen Redundanzverfahrens bzw. einer zyklischen Redundanzprüfung der Referenzwert als finaler Gewichtungsfaktor zum jeweiligen Prüfwert (d.h. den akkumulierten Gewichtungsfaktoren des jeweiligen Verarbeitungselement V11, ..., V55) aufakkumuliert und im Vergleichsschritt 102 bei zumindest einem Verarbeitungselement V11, ..., V55 festgestellt, dass die resultierende Summe z.B. ungleich dem Wert Null ist, so wird das Ergebnis NNR des neuronalen Netzes im ersten Bewertungsschritt 103 ebenfalls als nicht vertrauenswürdig eingestuft. Bei einer Einstufung des Ergebnisses NNR als nicht vertrauenswürdig können dann je nach Anwendung des neuronalen Netzes entsprechende Maßnahmen gesetzt werden - wie z.B. Verwerfen des Ergebnisses, Ausgabe einer entsprechenden Meldung oder Alarmierung, Stoppen der Ausführung, etc.

Wird im Vergleichsschritt 102 keine Abweichung zwischen den eindeutigen Prüfwerten der Verarbeitungseinheiten V11, ..., V55 bzw. der Prüfsignatur und den entsprechenden Referenzwerten bzw. der Referenzsignatur festgestellt, so wird in einem zweiten Bewertungsschritt 104 das Ergebnis NNR des neuronalen Netzes als vertrauenswürdig bewertet. Eine Einstufung des Ergebnisses NNR des neuronalen Netzes als vertrauenswürdig im zweiten Bewertungsschritt 104 erfolgt beispielsweise auch, wenn bei Verwendung eines zyklischen Redundanzverfahrens bzw. einer zyklischen Redundanzprüfung die resultierenden Summen aus jeweiligem Prüfwert und entsprechenden Referenzwert als finaler Gewichtungsfaktor bei jedem Verarbeitungselement V11, ..., V55, für welches der Prüfwert ermittelt wird, z.B. den Wert Null ergibt. Ein als vertrauenswürdig eingestuftes Ergebnis NNR des neuronalen Netzes kann dann je nach Anwendung entsprechend weiterverarbeitet werden, da die Integrität des neuronalen Netzes im Endgerät sichergestellt ist. Durch das Verfahren kann damit eine gewisse Zuverlässigkeit und Robustheit (Safety) und ein gewisser Schutz gegenüber bewussten Veränderungen und Verfälschungen des neuronalen Netzes im Endgerät erreicht werden.

## Patentansprüche

1. Verfahren zur Überprüfung der Integrität eines neuronalen Netzes während einer Ausführung in einer Hardwareeinheit, insbesondere in einem Endgerät, wobei das neuronale Netz durch seine Struktur und durch in einer Trainingsphase ermittelten Gewichtungsfaktoren (GF) definiert wird, und wobei für eine Implementierung des neuronalen Netzes ein so genanntes systolisches Array (AR) eingesetzt wird, welches matrixförmig angeordnete Verarbeitungselementen (V11, ..., V55) aufweist, **dadurch gekennzeichnet, dass** bei der Ausführung des neuronalen Netzes in jedem Verarbeitungselement (V11, ..., V55) des systolischen Arrays (AR) über eine Abfolge jener seriell eintreffenden Gewichtungsfaktoren (GF), welche vom jeweiligen Verarbeitungselement (V11, ..., V55) verarbeitet werden, durch Akkumulation ein eindeutiger Prüfwert ermittelt wird (101), dass nach der Ausführung des neuronalen Netzes der für das jeweilige Verarbeitungselement (V11, ..., V55) ermittelte, eindeutige Prüfwert mit einem entsprechenden Referenzwert für das jeweilige Verarbeitungselement (V11, ..., V55) verglichen wird (102), und dass ein Ergebnis (NNR) des neuronalen Netzes als nicht vertrauenswürdig eingestuft wird (103), wenn zumindest bei einem Verarbeitungselement (V11, ..., V55) der jeweils während der Ausführung ermittelte, eindeutige Prüfwert vom entsprechenden Referenzwert abweicht.

2. Verfahren nach Anspruch 1, **dadurch gekennzeichnet, dass** in den Verarbeitungselementen (V11, ..., V55) des systolischen Arrays Prüfeinheiten (P11, ..., P55) vorgesehen werden, welche als zusätzliche Hardwarekomponente in den Verarbeitungselementen (V11, ..., V55) ausgeführt sind und durch welche die jeweiligen Gewichtungsfaktoren (GF) zu eindeutigen Prüfwerten akkumuliert werden (101).

3. Verfahren nach einem der Ansprüche 1 bis 2, **dadurch gekennzeichnet, dass** zum Ermitteln des eindeutigen Prüfwertes aus der Abfolge der vom jeweiligen Verarbeitungselement verarbeiteten Gewichtungsfaktoren (GF) ein zyklisches Redundanzprüfungsverfahren verwendet wird (101).

4. Verfahren nach Anspruch 3, **dadurch gekennzeichnet, dass** der Referenzwert des jeweiligen Verarbeitungselements (V11, ..., V55) als finaler Gewichtungsfaktor in die Abfolge von Gewichtungsfaktoren des jeweiligen Verarbeitungselements eingefügt wird (101).

5. Verfahren nach einem der Ansprüche 1 bis 4, **dadurch gekennzeichnet, dass** zum Ermitteln des Prüfwertes aus der Abfolge der vom jeweiligen Verarbeitungselement (V11, ..., V55) verarbeiteten Gewichtungsfaktoren ein Hash-Algorithmus eingesetzt wird (101).

6. Verfahren nach einem der Ansprüche 1 bis 5, **dadurch gekennzeichnet, dass** nur von jenen Verarbeitungselementen (V11, ..., V15) des systolischen Arrays (AR) der eindeutige Prüfwert ermittelt wird (101), von welchen Eingangsschnittstellen für die Gewichtungsfaktoren (GF) in das systolische Array (AR) gebildet werden.

7. Verfahren nach einem der Ansprüche 1 bis 5, **dadurch gekennzeichnet, dass** nur von jenen Verarbeitungselementen (V51, ..., V55) des systolischen Arrays (AR) der eindeutige Prüfwert ermittelt wird (101), von welchen Ausgangsschnittstellen für die Gewichtungsfaktoren im systolischen Array (AR) gebildet werden.

8. Verfahren nach einem der vorangegangenen Ansprüche, **dadurch gekennzeichnet, dass** aus den Prüfwerten der Verarbeitungselemente (V11, ..., V55) durch zeilen- und/oder spaltenweise Akkumulierung eine Prüfsignatur gebildet wird (101) .

9. Verfahren nach einem der vorangegangenen Ansprüche, **dadurch gekennzeichnet, dass** die Referenzwerte für die Verarbeitungselemente (V11, ..., V55) mittels analytischer Ableitung oder durch Simulation in einer Designphase des neuronalen Netzes oder mit Hilfe zumindest einer initialen Ausführung des neuronalen Netzes ermittelt werden.

10. Verfahren nach einem der vorangegangenen Ansprüche, **dadurch gekennzeichnet, dass** die Referenzwerte für die Verarbeitungseinheiten (V11, ..., V55) in einer Speichereinheit (SP) der Hardwareeinheit, auf welcher das neuronale Netz ausgeführt wird, hinterlegt werden.

11. Verfahren nach einem der vorangegangenen Ansprüche, **dadurch gekennzeichnet, dass** für die Implementierung des neuronalen Netzes ein so genanntes Field Programmable Array oder eine anwendungsspezifische, integrierte Schaltung als Hardware-Plattform verwendet wird.
